# EUROPÄISCHE PATENTSCHRIFT

(11) **EP 2 559 362 B1**
(45) Veröffentlichungstag und Bekanntmachung des Hinweises auf die Patenterteilung: **03.12.2014**
(21) Anmeldenummer: 12178155.3
(22) Anmeldetag: 27.07.2012
(51) Int. Cl.: A47J 43/07

(54) **Motorbetriebenes Küchengerät**
Motor-powered kitchen device
Appareil électroménager motorisé

(30) Priorität: 16.08.2011 DE 102011081047
(43) Veröffentlichungstag der Anmeldung: 20.02.2013
(73) Patentinhaber: BSH Bosch und Siemens Hausgeräte GmbH, 81739 München (DE)
(72) Erfinder: Cater, Matej, 3301 Petrovce (SI); Jegrisnik, Uros, 3313 Polzela (SI); Mazej, Stanislav, 3303 Gomilsko (SI); Pirih, Marjan, 4275 Begunje (SI)

(56) Entgegenhaltungen:
- DE-A1- 2 250 177

## Beschreibung

### Gebiet der Erfindung

Die Erfindung betrifft ein motorbetriebenes Küchengerät mit einer Antriebseinheit, einem Behälter zur Aufnahme von Lebensmitteln, der durch einen Deckel verschlossen werden kann, und einem innerhalb des Behälters angeordneten Werkzeug mit einem Instrument zum Bearbeiten von Lebensmitteln, wobei das Werkzeug eine mit dem Instrument drehfest gekoppelte Antriebswelle aufweist.

### Hintergrund der Erfindung

Aus der DE 2250177 A1 ist ein Küchengerät bekannt, das einen Schlagbecher aufweist, der mit einem Deckel verschließbar ist. Das Küchengerät weist eine Sicherheitsentkupplungseinrichtung für ein Bearbeitungswerkzeug auf, bei der eine Antriebswelle mittels eines Federelements verschoben werden kann.

Aus WO 01/67937 A1 ist ein Bearbeitungsbehälter für Nahrungsmittel bekannt, umfassend einen Behälterdeckel und eine im Inneren angeordnete Werkzeugwelle mit daran angeordneten Bearbeitungswerkzeugen. Die Werkzeugwelle ist im Behälterdeckel und am Behälterboden drehbar gelagert und befindet sich hierbei in einer senkrechten Stellung. Da die Werkzeugwelle am Behälterboden außerdem kippbeweglich gelagert ist, wird die Werkzeugwelle bei Abnehmen des Behälterdeckels durch eine Kippstellung blockierbar. Dadurch wird ein sicherheitsrelevanter Bremsmechanismus bereitgestellt. Die Sicherheitsrisiken bei einer nicht ordnungsgemäßen Abnahme des Behälterdeckels sind nicht diskutiert.

Außerdem ist aus WO 02/32278 A1 ein Küchengerät bekannt, das einen Behälter, eine Abdeckung für den Behälter, eine Werkzeugeinheit und eine Antriebseinheit umfasst. Die Werkzeugeinheit ist im Behälter in einem Lager drehbar gelagert und ragt durch eine Öffnung in der Abdeckung zu einer Kupplung mit der Antriebseinheit. Außerdem ist die Werkzeugeinheit mit einer Bremseinrichtung ausgestattet, die deaktiviert ist, wenn die Antriebseinheit angekoppelt ist. Die Bremseinrichtung besteht aus Teilen, die bei Abkopplung der Antriebseinheit durch Reibung mit dem Behälter wechselwirken. Die Sicherheitsrisiken bei einer nicht ordnungsgemäßen Abkopplung der Antriebseinheit sind nicht diskutiert.

Aus DE 4128456 A1 ist ein Zerkleinerungsgerät zum Zerkleinern von Nahrungsmitteln bekannt. Das Gerät umfasst einen Behälter, einen Deckel, ein als Messer ausgebildetes Arbeitswerkzeug, einen Lagerzapfen und eine Antriebswelle, die über eine Kupplungsvorrichtung mit einem Antrieb verbunden ist. Im Übertragungsweg zwischen Antrieb und Messer ist eine Bremse ausgebildet, die durch eine relative Verschiebung des Arbeitswerkzeuges gegenüber dem Lagerzapfen entgegen der Rückstellkraft einer Feder ein- und ausgeschaltet werden kann. Dieser Bremsmechanismus wird durch zwei gegeneinander reibende Teile bewirkt, die in Betriebsstellung keinen Kontakt haben, in der Lösestellung jedoch in Eingriff gebracht werden, wodurch das Arbeitswerkzeug abgebremst werden kann. Die Sicherheitsrisiken bei einer nicht ordnungsgemäßen Abkopplung des Antriebs oder der Kupplungsvorrichtung sind nicht diskutiert.

Gemäß DE 693 00 060 T2 weist ein Küchengerät ein Gehäuse auf, das auf seinem oberen Teil einen ringförmigen Sitz zur Aufnahme eines abnehmbaren Behälters aufweist und einen Motor umschließt, dessen Abtriebswelle vom Sitz vorsteht. Der Behälter weist einen abnehmbaren Boden auf, dessen Mittelbereich ein drehbares Werkzeug trägt, das dazu ausgebildet ist, dass es sich an die Abtriebswelle des Motors ankuppelt, wenn der Sockel richtig auf dem Sitz eingesetzt ist. Der Sockel weist einen Sicherheitsriegel auf, der zwischen einer Freigabestellung, in welcher er die Kupplung des Werkzeugs mit der Abtriebswelle des Motors gestattet, und einer Sperrstellung, in welcher er die Kupplung des Werkzeugs mit der Welle des Motors verhindert, beweglich ist. Der Sicherheitsriegel bildet einen Finger aus, dessen Betätigung dem Einsetzen des Behälters auf dem Sockel untergeordnet ist. Bei einem nicht korrekten Aufsetzen oder Aufschrauben des Behälters auf den Sockel wird der Betätigungsfinger nicht oder nicht richtig beaufschlagt, so dass eine Kopplung des Werkzeugs mit der Abtriebswelle verhindert wird. Sicherheitsrisiken durch einen eventuellen Eingriff eines Benutzers in ein rotierendes Werkzeug durch nicht ordnungsgemäßes Abnehmen eines Deckels des Behälters werden nicht angesprochen.

Aus DE 699 13 099 T2 ist ein Zusatzgerät für eine Küchenmaschine bekannt, das ein Werkzeug aufweist, einen Träger, in dem das Werkzeug drehbar gelagert ist, und ein Kupplungselement, mit dessen Hilfe das Werkzeug mit einem Antriebselement der Küchenmaschine gekuppelt werden kann. Ferner umfasst das Zusatzgerät einen Behälter, der mit dem Träger entfernbar gekuppelt ist und ein Sicherheitselement sowie eine Verriegelungsvorrichtung, die das Sicherheitselement verriegelt, wenn der Behälter von dem Träger entkuppelt ist und das Sicherheitselement freigibt, wenn der Behälter mit dem Träger gekuppelt ist. Das Sicherheitselement verhindert eine Kupplung des Kupplungselementes mit dem Antriebselement. Durch Verlagerung des Schließelementes kann der Benutzer den Behälter mit dem Träger kuppeln. Zur Betätigung des Schließelements ist somit eine zusätzliche Handhabung durch den Benutzer erforderlich.

Ferner ist es aus der nicht vorveröffentlichten Patentanmeldung BSH 41549 bekannt, dass ein Werkzeug für ein motorbetriebenes Küchengerät, an dem ein Instrument für die Bearbeitung von Lebensmitteln angeordnet ist, eine Antriebswelle aufweist, an deren Ende eine Kupplung ausgebildet ist, sowie eine Hülle, die teilweise oder vollständig um die Kupplung herum angeordnet ist, wobei das Werkzeug ein Rückstellmittel aufweist und die Hülle durch die Rückstellkraft des Rückstellmittels in eine Kupplungsrichtung der Kupplung relativ zur Kupplung verschiebbar ist. Hierdurch kann auch bei unsachgemäßer Nutzung eine Trennung der rotierenden Schneideinstrumente von der Gegenkupplung erfolgen.

### Der Erfindung zugrundeliegende Aufgabe

Der Erfindung liegt die Aufgabe zugrunde, ein Küchengerät der eingangs genannten Art zu schaffen, mit dem die Sicherheit für den Fall einer Fehlbedienung erhöht werden kann. Insbesondere soll die Sicherheit erhöht werden können, ohne dass zusätzliche Handhabungsschritte des Benutzers notwendig sind, sondern eine einfache und intuitive Bedienung möglich ist. Ferner sollen die hierfür notwendigen konstruktiven Maßnahmen bei der Herstellung möglichst einfach zu implementieren sein und nicht notwendigerweise eine Bremseinrichtung umfassen.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch ein motorbetriebenes Küchengerät mit den Merkmalen des Anspruchs 1.

Ein erfindungsgemäßes motorbetriebenes Küchengerät weist eine Antriebseinheit auf, die insbesondere einen Elektromotor und ggf. ein Getriebe umfassen kann. Ferner weist das Küchengerät einen Behälter zur Aufnahme von bearbeiteten oder zu bearbeitenden Lebensmitteln auf, der durch einen Deckel verschließbar ist, wobei der Deckel zum Öffnen vollständig von dem Küchengerät bzw. dem Behälter trennbar sein kann oder in einer Offenstellung am Küchengerät bzw. am Behälter gehalten sein kann. Ferner umfasst das Küchengerät ein im Behälter angeordnetes bzw. anordenbares Werkzeug, das ein Instrument zum Bearbeiten von Lebensmitteln trägt bzw. an dem ein solches Instrument befestigbar ist. Insbesondere kann das Instrument drehbar ausgebildet sein, beispielsweise als Mischflügel oder Schneidmesser. Das Werkzeug weist zum Antrieb des Instruments eine Antriebswelle auf, die mit dem Instrument etwa über eine von der Antriebswelle angetriebene, diese umfangsseitig umgebende Hülle, mit der das Instrument verbunden ist, drehfest gekoppelt sein kann.

Erfindungsgemäß ist die Antriebswelle in einer Längsrichtung der Antriebswelle verlagerbar zwischen einer Antriebsstellung, in der die Antriebswelle von der Antriebseinheit antreibbar ist, und einer Trennstellung, in der die Antriebswelle von der Antriebseinheit getrennt ist.

Dadurch, dass die Antriebswelle in einer Längsrichtung zwischen einer Antriebsstellung und einer Trennstellung verlagerbar ist, kann auf einfache Weise eine sichere und rasche Trennung des Werkzeugs und damit des Instruments von der Antriebseinheit des Küchengeräts erreicht werden. Auf diese Weise kann Verletzungen vorgebeugt werden, die ein noch mit der Antriebseinheit in Wirkverbindung stehendes Werkzeug bzw. Instrument verursachen könnte. Insbesondere lässt sich dadurch auf besonders einfache Weise verhindern, dass eine Bedienperson mit dem noch angetriebenen Werkzeug in Berührung kommt. Hierdurch ist der Vorteil der Erfindung, die Sicherheit für den Fall einer Fehlbedienung zu erhöhen, auf konstruktiv besonders einfache und wirkungsvolle Weise erreichbar.

Das Küchengerät weist ein Grundgerät auf, das die Antriebseinheit umfasst, wobei auf das Grundgerät der Behälter und das Werkzeug aufsetzbar sind. In der Antriebsstellung ist die Antriebswelle mit einer Zwischenwelle drehfest gekoppelt und in der Trennstellung von dieser getrennt, wobei durch Aufsetzen des Behälters die Zwischenwelle mit einer Abtriebswelle der Antriebseinheit drehfest koppelbar und durch Abnehmen des Behälters von dieser trennbar ist.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Gemäß einer bevorzugten Ausführungsform des erfindungsgemäßen Küchengeräts wirkt die Antriebswelle mit dem Deckel des Behälters derart zusammen, dass durch Verschließen des Behälters mit dem Deckel die Antriebswelle in Antriebsstellung und durch Öffnen des Deckels in Trennstellung bringbar ist. Aufgrund des Zusammenwirkens des Deckels mit der Antriebswelle kann auf diese Weise sichergestellt werden, dass nur bei mit dem Deckel verschlossenem Behälter ein Antrieb des Instruments erfolgen kann, und dass der Antrieb beim Öffnen des Deckels des Behälters automatisch unterbrochen wird. Hierdurch ist auf konstruktiv einfach und besonders wirkungsvolle Weise der Vorteil der Erfindung, auch im Fall einer Fehlbedienung Verletzungen vorzubeugen, erreichbar.

In bevorzugter Weise weist der Deckel unterseitig einen Dorn auf, der derart angeordnet ist, dass er beim Aufsetzen des Deckels auf den Behälter mit der Antriebswelle zum Verlagern der Antriebswelle in die Antriebsstellung zusammenwirkt, insbesondere die Antriebswelle in ihrer Längsrichtung in die Antriebsstellung verlagert. Der Dorn kann mit dem Deckel fest oder drehbar verbunden sein und kann beispielsweise an diesen angeformt oder in diesen eingeschraubt sein. In weiter vorteilhafter Weise können der Behälter und der Deckel derart ausgebildet sein, dass der Deckel beim Aufsetzen zum Verschließen des Behälters eine Bewegung ausführt, die zumindest im Endabschnitt der Aufsetzbewegung im Wesentlichen in der Längsrichtung der Antriebswelle gerichtet ist.

Hierdurch führt auch der am Deckel angeordnete Dorn eine im Wesentlichen in der Längsrichtung der Antriebswelle gerichtete Bewegung aus, wodurch diese aus der Trennstellung in die Antriebsstellung verlagert werden kann. Hierdurch kann auf besonders einfache Weise ein Zusammenwirken des Deckels mit der Antriebswelle erreicht werden, so dass bei Öffnen des Deckels eine Trennung der Antriebswelle von der Antriebseinheit und beim Aufsetzen des Deckels ein Verbinden der Antriebswelle mit der Antriebseinheit erfolgt. Insbesondere können der Dorn und die Antriebswelle derart zusammenwirken, dass ein Antreiben der Antriebswelle durch die Antriebseinheit nur in solchen Positionen des Deckels möglich ist, in denen keine Öffnung zwischen dem Deckel und einem Rand des Behälters verbleibt oder jedenfalls nur eine solche Öffnung, dass kein Finger eines Benutzers in den Innenraum des Behälters gelangen kann. Hierdurch kann eine Verletzungsgefahr für den Benutzer in besonders einfacher und sicherer Weise ausgeschlossen werden.

Weiterhin ist es bevorzugt, dass die Antriebswelle oberseitig zugänglich angeordnet ist und eine stirnseitige Wirkfläche zum Zusammenwirken mit dem Deckel, insbesondere mit dem Dorn des Deckels, aufweist. Hierdurch kann auf konstruktiv besonders einfache Weise ein sicheres Zusammenwirken des Deckels mit der Antriebswelle zur Verlagerung der Antriebswelle erreicht werden.

Vorzugsweise sind Mittel zum Zentrieren des Dorns zum Zusammenwirken mit der Antriebswelle beim Aufsetzen des Deckels vorgesehen. So können beispielsweise ein Rand des Behälters sowie ein hierzu passender Rand des Deckels derart ausgebildet sein, dass der Deckel nur zentriert aufgesetzt werden kann, so dass automatisch der Dorn zum Zusammenwirken mit der Antriebswelle zentriert wird und insbesondere auf die stirnseitige Wirkfläche der Antriebswelle einwirkt. Es können aber auch mit dem Behälter oder mit dem Werkzeug verbundene Zentriermittel vorgesehen sein, durch die der Dorn selbst zentriert wird, d.h. beim Aufsetzen des Deckels zum Zusammenwirken mit der stirnseitigen Wirkfläche der Antriebswelle geführt wird. Derartige Zentriermittel können beispielsweise auch an einem Einsatz des Behälters, der ein von der Antriebswelle antreibbares Instrument umfassen kann, ausgebildet sein. Hierdurch ist eine besonders sichere und einfache Funktion erreichbar.

Gemäß einer bevorzugten Ausführungsform der Erfindung ist der Dorn als Kugel ausgebildet, und die Achse weist an ihrer oberseitigen Stirnfläche eine zentrale Ausnehmung zur Aufnahme der Kugel auf. Hierdurch kann einerseits ein definierter Druckpunkt zum Zusammenwirken des Dorns mit der Antriebswelle festgelegt werden, wodurch eine besonders sichere Funktion erreichbar ist. Ferner kann der Dorn derart ausgebildet sein, dass dieser beim Aufsetzen des Deckels bereits, bevor dieser eine endgültige Schließposition erreicht, in der der Behälter verschlossen ist, mit der Antriebswelle zusammenwirkt. Da vor Erreichung der Endposition auch eine Schräglage des Deckels möglich ist, wird durch die endseitige Ausbildung des Dorns als Kugel auch in einer solchen Position noch eine korrekte Betätigung der Antriebswelle ermöglicht.

In vorteilhafter Weise können weiterhin Rastmittel vorgesehen sein zum rastenden Verbinden des Dorns mit der Antriebswelle. So kann der Dorn in seinem unteren Endabschnitt beispielsweise eine Ringnut aufweisen, in die eine federnde Raste der Antriebswelle eingreift. Hierdurch kann eine in beide Richtungen, d.h. sowohl beim Aufsetzen wie beim Abnehmen des Deckels, wirkende Verbindung zwischen dem Dorn und der Antriebswelle erzielt werden, wodurch eine besonders sichere Funktion gewährleistet werden kann.

Gemäß einer bevorzugten Ausführungsform wird die Antriebswelle durch eine elastische Rückstellkraft in die Trennstellung vorgespannt. Hierdurch kann das Erreichen der Trennstellung beim Abnehmen des Deckels bzw. das Halten der Antriebswelle in der Trennstellung, wenn der Deckel nicht auf den Behälter aufgesetzt ist, zusätzlich sichergestellt werden. Hierdurch wird ein weiterer Sicherheitsgewinn erzielt. So kann auf diese Weise insbesondere sichergestellt werden, dass auch bei einer Beschädigung des Deckels, beispielsweise bei einem Verlust des Dorns, kein Antrieb des Instruments erfolgen kann.

In bevorzugter Weise wird die Rückstellkraft durch eine auf die Antriebswelle wirkende Federkraft realisiert, die beispielsweise durch eine Schraubenfeder erzeugt werden kann. Hierdurch ist auf konstruktiv einfache und sichere Weise eine Trennung der Antriebswelle von der Antriebseinheit erreichbar.

Insbesondere ist der Behälter mit dem in diesem angeordneten Werkzeug auf das Küchengerät aufsetzbar. Hierdurch wird die vorteilhafte Möglichkeit geschaffen, durch unterschiedliche aufsetzbare Behälter und/oder Werkzeuge unterschiedliche Arten von Lebensmitteln zu bearbeiten bzw. unterschiedliche Bearbeitungsweisen zu ermöglichen. Ein derartig ausgebildetes Küchengerät ist besonders vielseitig verwendbar.

Die Zwischenwelle ist insbesondere dem Werkzeug zugeordnet und ist gemeinsam mit diesem bzw. mit dem Behälter auf das Grundgerät zur Kopplung mit der Abtriebswelle aufsetzbar und durch Abnehmen des Werkzeugs bzw. des Behälters von der Abtriebswelle der Antriebseinheit trennbar. Die Abtriebswelle kann beispielsweise die Motorwelle eines Elektromotors sein oder eine mit dieser drehfest oder über ein Getriebe verbundene drehbare Welle. Hierdurch kann bei einem vielseitig verwendbaren und leicht handhabbaren Küchengerät eine besonders sichere Ausführung der Trennung zwischen Antriebswelle und Abtriebswelle in Abhängigkeit von der Position des Deckels erreicht werden.

Vorzugsweise umfasst das Werkzeug eine Kupplung zur Kopplung der Antriebswelle mit der Zwischenwelle, die ein der Antriebswelle zugeordnetes, gemeinsam mit dieser in der Längsrichtung der Antriebswelle verlagerbares Kupplungsstück und ein der Zwischenwelle zugeordnetes, in der Längsrichtung der Antriebswelle feststehendes Kupplungsgegenstück aufweist. Dabei können das Kupplungsstück und/oder das Kupplungsgegenstück Zahnmittel aufweisen, die in entsprechende Ausnehmungen des Kupplungsgegenstücks bzw. des Kupplungsstücks eingreifen. Kupplung und Kupplungsgegenstück können jedoch auch beispielsweise durch Reibung zusammenwirken.

In vorteilhafter Weise ist die Zwischenwelle in ihrem der Abtriebswelle zugewandten Endbereich mit einem Querschnitt in Form eines regelmäßige Vielecks, etwa eines Sechsecks, ausgebildet, und die Abtriebswelle weist in ihrem dem Werkzeug zugewandten Endbereich eine offene Buchse mit einem zu dem Querschnitt des Endbereichs der Zwischenwelle komplementären Querschnitt auf. Somit ist die Zwischenwelle beim Aufsetzen des Behälters auf das Grundgerät zur Herstellung einer drehfesten Verbindung der Zwischenwelle mit der Abtriebswelle der Antriebseinheit in den Hohlraum der Buchse einführbar. Hierdurch kann eine besonders einfache, leicht bedienbare und betriebssichere Ausführung erreicht werden.

Ein erfindungsgemäßes Werkzeug für ein oben beschriebenes Küchengerät weist eine Antriebswelle auf, die in einer Längsrichtung verlagerbar ist zwischen einer Antriebsstellung und einer Trennstellung. Das Werkzeug weist eine Zwischenwelle und eine Kupplung zwischen der Antriebswelle und der Zwischenwelle auf, wobei die Kupplung durch Verlagerung der Antriebswelle in der Längsrichtung betätigbar ist, so dass die Kupplung in der Antriebsstellung geschlossen und in der Trennstellung geöffnet ist. Die Zwischenwelle ist mit einer Abtriebswelle der Antriebseinheit drehfest verbindbar. Die Antriebswelle kann zur Verlagerung in Längsrichtung insbesondere derart ausgebildet sein, dass sie durch Aufsetzen eines Deckels auf den Behälter, in dem das Werkzeug angeordnet werden kann, betätigbar ist. Hierdurch kann eine konstruktiv einfache, leicht handhabbare und besonders sichere Anwendung des Werkzeugs zur Bearbeitung von Lebensmitteln mit Hilfe eines mit dem Werkzeug verbundenen Instruments ermöglicht werden.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: ein motorbetriebenes Küchengerät gemäß einem Ausführungsbeispiel der Erfindung mit geschlossenem Deckel in Schnittdarstellung;
- Fig. 2: das Küchengerät der Fig. 1 mit leicht angehobenem Deckel in Schnittdarstellung;
- Fig. 3: einen Behälter mit darin angeordnetem nicht erfindungsgemässen Werkzeug mit leicht angehobenem Deckel in Schnittdarstellung;
- Fig. 4: einen Behälter des Küchengeräts gemäß Fig. 1 oder 3 in perspektivischer Ansicht;
- Fig. 5: ein Werkzeug des Küchengeräts gemäß Fig. 1 oder 3 in perspektivischer Ansicht;
- Fig. 6: einen Einsatz des Küchengeräts gemäß Fig. 1 oder 3 in perspektivischer Ansicht und schließlich
- Fig. 7: einen Deckel des Küchengeräts gemäß Fig. 1 oder 3 in perspektivischer Ansicht.

### Ausführliche Beschreibung

Bei der nachfolgenden Beschreibung einer bevorzugten Ausführungsform der vorliegenden Erfindung bezeichnen gleiche Bezugszeichen gleiche oder vergleichbare Komponenten. Der Übersichtlichkeit halber sind nicht in allen Figuren alle Bezugszeichen eingetragen.

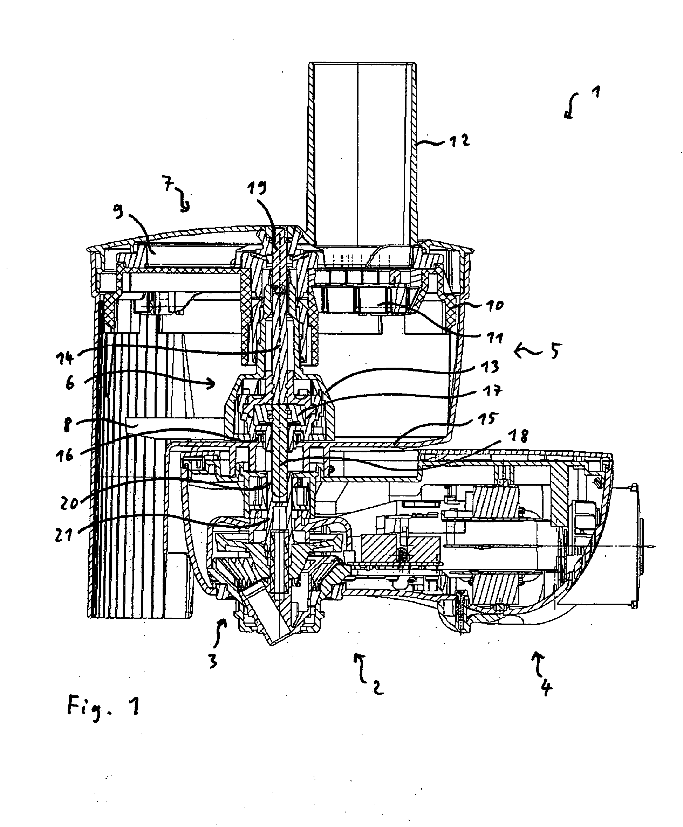

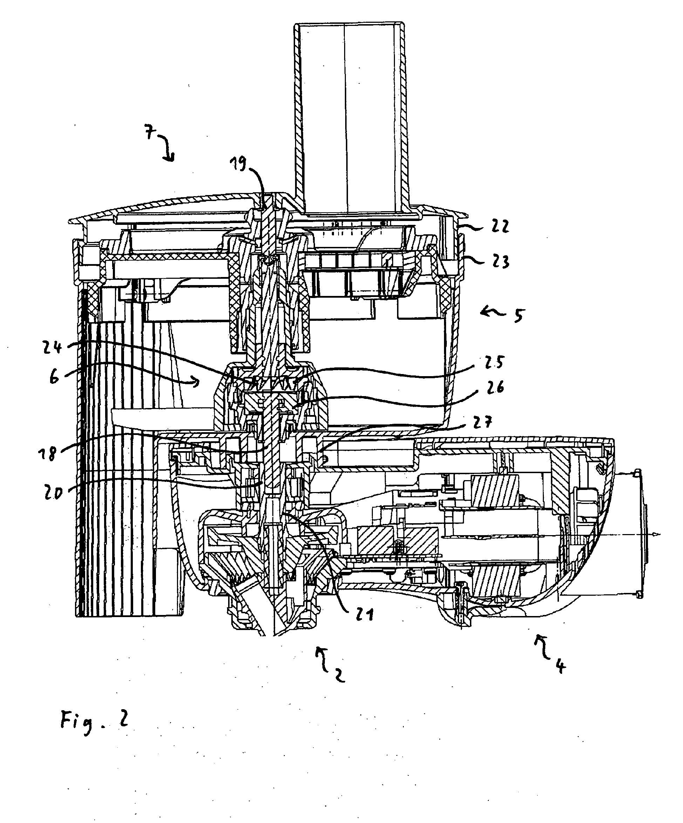

Fig. 1 und 2 zeigen ein Ausführungsbeispiel eines erfindungsgemäßen Küchengeräts, wobei der Aufbau des Küchengeräts anhand von Fig. 1 beschrieben wird, während durch Vergleich der Figuren 1 und 2 die Sicherheitsfunktion der Erfindung näher erläutert wird.

Ein motorbetriebenes Küchengerät 1 umfasst gemäß Fig. 1 eine Antriebseinheit 2, die insbesondere einen Motor 3 sowie ggf. ein nicht dargestelltes Getriebe umfasst, eine Anschlusseinheit 4 mit elektrischen Anschlüssen und Bedienelementen, einen Behälter 5 zum Aufnehmen von bearbeiteten bzw. zu bearbeitenden Lebensmitteln, ein innerhalb des Behälters 5 angeordnetes Werkzeug 6 und einen Deckel 7 zum Verschließen des Behälters 5. Das Werkzeug 6 weist als Instrumente zur Bearbeitung der Lebensmittel einen Mischflügel 8 sowie ein Schneidmesser 9 auf. Das Schneidmesser 9 ist innerhalb eines Einsatzes 10 angeordnet, der in den Behälter 5 eingesetzt werden kann, und der weiterhin ein Schneidgitter 11 zum Zusammenwirken mit dem Schneidmesser 9 zum Würfeln von Lebensmitteln enthalten kann. Zum Zuführen der zu bearbeitenden Lebensmittel kann der Deckel 7 einen Zuführschacht 12 aufweisen.

Das Werkzeug 6 weist eine Hülle 13 auf, die koaxial zu einer Antriebswelle 14 angeordnet ist, diese umfangsseitig umschließt und von dieser angetrieben wird, insbesondere drehfest mit dieser verbunden ist. Die Hülle 13 trägt die Instrumente bzw. nicht im Einzelnen dargestellte Kopplungselemente, durch die diese mit der Hülle 13 gekoppelt sind und durch diese und somit durch die Antriebswelle 14 angetrieben werden. Die Hülle 13 kann weitere Elemente zur Drehmomentübertragung enthalten und schließt mit dem Boden 15 des Behälters 5 ab, wobei zur Abdichtung beispielsweise eine Labyrinthdichtung 16 vorgesehen sein kann.

Die Hülle 13 umschließt weiterhin eine Kupplung 17, die eine Kopplung der Antriebswelle 14 mit einer in Verlängerung der Antriebswelle 14 angeordneten Zwischenwelle 18 vermittelt. Zur Betätigung der Kupplung ist die Antriebswelle 14 innerhalb der Hülle 13 in ihrer Längsrichtung relativ zum Werkzeug 6 bzw. zum Behälter 5 verschiebbar gelagert. In der in Fig. 1 gezeigten unteren Position der Antriebswelle 14 ist die Kupplung 17 geschlossen, so dass eine Drehmomentübertragung von der Zwischenwelle 18 auf die Antriebswelle 14 erfolgen kann. In dieser Position wird die Antriebswelle 14 entgegen der Kraft einer in Fig. 1 nicht gezeigten Schraubenfeder durch den an der oberen Stirnseite der Antriebswelle 14 anliegenden Dorn 19 des Deckels 5 gehalten. Die Zwischenwelle 18 greift mit ihrem unteren Ende in eine Kupplungsbuchse 20 ein, die mit einer Abtriebswelle 21 des Motors 3 drehfest verbunden ist. Hierdurch kann über die Abtriebswelle 21, die Kupplungsbuchse 20, die Zwischenwelle 18 und die Kupplung 17 ein Antrieb der Antriebswelle 14 und damit ein Antrieb der Instrumente, etwa des Mischflügels 8 und des Schneidmessers 9, erfolgen.

In der in Fig. 1 gezeigten Stellung ist der Deckel 7 auf den Behälter 5 aufgesetzt, so dass dieser verschlossen ist und ein Eingriff eines Benutzers in den Behälter 5 und damit eine Verletzungsgefahr durch die rotierenden Instrumente ausgeschlossen ist. Insbesondere ist auch der Zuführschacht 12 derart ausgebildet, dass kein Eingriff in den Arbeitsbereich des Schneidmessers 9 möglich ist.

In der in Fig. 2 gezeigten Stellung ist der Deckel 7 um einen geringen Betrag, beispielsweise etwa 10 mm, vom Behälter 5 abgehoben. Aufgrund der Überlappung des nach unten vorstehenden Rands 22 des Deckels 7 mit einem nach oben vorstehenden Rand 23 des Behälters 5 ist auch hierbei noch kein Eingriff eines Benutzers in den Behälter 5 möglich. Durch die Kraft der nicht dargestellten Schraubenfeder, durch die die Antriebswelle 14 nach oben vorgespannt ist, sowie aufgrund einer rastenden Verbindung des Dorns 19 mit der Antriebswelle 14 folgt die Antriebswelle 14 der Bewegung des Dorns 19 beim Abheben des Deckels 7 nach oben. Hierdurch wird die Kupplung 17 getrennt. Wie in Fig. 2 angedeutet, werden beispielsweise Zähne 24 des mit der Antriebswelle 14 verbundenen, in axialer Richtung verschiebbaren Kupplungsstücks 25 aus entsprechenden Ausnehmungen des nicht in der axialen Richtung verschiebbaren Kupplungsgegenstücks 26, das mit der Zwischenwelle 18 verbunden ist, ausgehoben. Die Drehmomentübertragung von der Zwischenwelle 18 zur Antriebswelle 14 wird dadurch unterbrochen. Beim Abheben des Deckels 7 vom Behälter 5 wird daher der Antrieb der Instrumente unterbrochen, bevor ein Eingriff in den Behälter 5 möglich ist. Insbesondere wird der Antrieb ausreichend früh unterbrochen, so dass bei einem weiteren Abheben die Instrumente bereits zum Stillstand gekommen sind, bevor der Deckel 7 so weit vom Behälter 5 abgehoben ist, dass ein Finger eines Benutzers in den Arbeitsbereich des Schneidmessers 9 gelangen könnte. Hierdurch kann eine Gefährdung auch bei einer Fehlbedienung vermieden werden.

Wird der Deckel 7 weiter abgehoben als in Fig. 2 gezeigt ist, so wird ein Eingriff des Benutzers in den Behälter 5 möglich, etwa zum Entnehmen des bearbeiteten Lebensmittels. Da jedoch kein Antrieb der Antriebswelle 14 und damit auch kein Antrieb des Mischflügels 8 und des Schneidmessers 9 mehr erfolgt, ist dies gefahrlos möglich. Insbesondere steht durch die Unterbrechung des Antriebs schon zu einem Zeitpunkt, in dem noch kein Eingriff in den Behälter 5 möglich ist, wie in Fig. 2 gezeigt, in jedem Fall bis zu einem Öffnen des Behälters 5 eine ausreichende Zeit zur Verfügung, so dass die nicht mehr angetriebenen Werkzeuge zum vollständigen Stillstand kommen. Hierfür ist keine besondere Bremseinrichtung notwendig. Hierdurch kann eine einfache Handhabung und einer hohe Sicherheit auch bei einer Fehlbedienung, wie diese beispielsweise in einem Abnehmen des Deckels 5 bei laufendem Motor 3 bestehen kann, erreicht werden.

Der Behälter 5 kann mit dem innerhalb des Behälters angeordneten Werkzeug 6 von der Antriebseinheit 2, die zusammen mit der Anschlusseinheit 4 ein Grundgerät bilden kann, trennbar ausgebildet sein. Dabei wird beim Abheben des Behälters 5 die Zwischenwelle 18 aus der Kupplungsbuchse 20 der Abtriebswelle 21 der Antriebseinheit 2 herausgezogen, so dass ein Antrieb der Antriebswelle 14 in jedem Falle unterbrochen wird, unabhängig von der Position des Deckels 7. Beim Aufsetzen des Behälters auf das Grundgerät bzw. auf die Antriebseinheit 2 wird durch das Kopplungselement 27 die Antriebswelle 14 relativ zur Kupplungsbuchse 20 zentriert, so dass eine Verbindung der Zwischenwelle 18 mit der Abtriebswelle 21 hergestellt wird. Hierfür ragt ein unterer Endbereich der Zwischenwelle 18 aus einem Kopplungselement 27 des Behälters 5 nach unten, um in die Kupplungsbuchse 20 einzugreifen. Der untere Endbereich der Zwischenwelle 18 ist zur drehfesten Kopplung mit der Abtriebswelle 21 als Sechskantstift ausgebildet, und die Kupplungsbuchse 20 weist einen Hohlraum mit einem entsprechenden Querschnitt auf, in den dieser eingreifen kann.

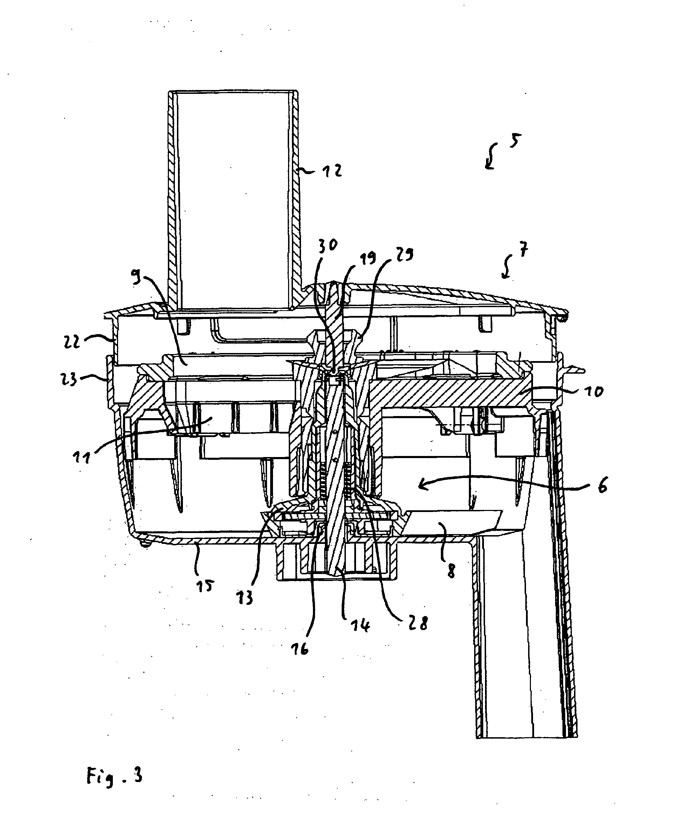

In dem nicht erfindungsgemäßen Küchengerät gemäss Fig. 3 ist ein Behälter 5 zusammen mit einem in diesem angeordneten Werkzeug 6 vorgesehen. Der Behälter 5 kann gemeinsam mit dem Werkzeug 6 auf ein in Fig. 3 nicht gezeigtes Grundgerät eines Küchengeräts aufgesetzt werden, wobei das Grundgerät wie zu Fig. 1 und 2 beschrieben ausgebildet sein kann. Der Behälter 5 kann mit einem Deckel 7 verschlossen werden. Das Werkzeug 6 weist Instrumente zur Bearbeitung von Lebensmitteln auf, etwa einen Mischflügel 8 und ein Schneidmesser 9, das innerhalb eines Einsatzes 10 angeordnet ist, der in den Behälter 5 eingesetzt werden kann, und der ein Schneidgitter 11 zum Zusammenwirken mit dem Schneidmesser 9 enthalten kann. Der Deckel 7 des Behälters 5 kann einen Zuführschacht 12 aufweisen.

Das Werkzeug 6 weist eine Hülle 13 auf, die koaxial zu einer Antriebswelle 14 angeordnet ist, diese umfangsseitig umschließt und von dieser angetrieben wird, insbesondere drehfest mit dieser verbunden ist. Die Hülle 13 trägt die Instrumente bzw. nicht im Einzelnen dargestellte Kopplungselemente, durch die diese mit der Hülle 13 verbunden sind. Die Hülle 13 kann weitere Elemente zur Drehmomentübertragung enthalten und schließt mit dem Boden 15 des Behälters 5 ab, wobei zur Abdichtung beispielsweise eine Labyrinthdichtung 16 vorgesehen sein kann.

Die Antriebswelle 14 ist innerhalb der Hülle 13 in ihrer Längsrichtung relativ zum Behälter 5 verschiebbar verschiebbar gelagert. Zur Betätigung der Längsverschiebung der Antriebswelle 14 weist der Deckel 7 einen zentral angeordneten, nach unten weisenden Dorn 19 auf.

In der in Fig. 3 gezeigten Position des Deckels 7 ist dieser um einen geringen Betrag, beispielsweise etwa 10 mm, angehoben. In dieser Position ist aufgrund einer Überlappung des nach unten vorstehenden Rands 22 des Deckels 7 mit einem nach oben vorstehenden Rand 23 des Behälters 5 ein Eingriff eines Benutzers in den Behälter 5 und damit in den Arbeitsbereich der Instrumente ausgeschlossen. Durch die Kraft einer Schraubenfeder 28, durch die die Antriebswelle 14 nach oben vorgespannt ist, sowie aufgrund einer rastenden Verbindung des Dorns 19 mit der Antriebswelle 14 folgt die Antriebswelle 14 der Bewegung des Dorns 17 beim Abheben des Deckels 7 über eine begrenzte Strecke nach oben; zur Begrenzung der Strecke kann ein Anschlag vorgesehen sein. Dabei sind die Kraft der Schraubenfeder 28 und die Rastkraft, mit der der Dorn 19 mit der Antriebswelle 14 verbunden ist, derart bemessen, dass die Antriebswelle 14 auch unter Überwindung einer etwaigen Reibungskraft, die etwa durch eine Belastung der Antriebswelle 14 beim Betrieb der Instrumente zustande kommen kann, aus der Kupplungsbuchse 20 herausgezogen wird. Im weiteren Verlauf der Abnehmbewegung des Deckels 7 löst sich der Dorn 19 von der Antriebswelle 14 durch Öffnen der nur mit einer geringen Kraft gehaltenen Rastverbindung. Diese Position ist in Fig. 3 gezeigt. Dabei ist die Antriebswelle 14 bereits ausreichend weit nach oben verlagert, so dass der untere Endbereich der Antriebswelle 14 von einer Kupplungsbuchse der Abtriebswelle des in Fig. 3 nicht dargestellten Grundgeräts getrennt ist. Der Antrieb der Antriebswelle 14 durch den Motor wird somit unterbrochen.

Wie in Fig. 3 weiter zu erkennen ist, weist der Einsatz 10 eine kegelförmig ausgebildete Zentrierhülse 29 auf, durch die beim Aufsetzen des Deckels 7 auf den Behälter 5 der Dorn 19 zum Zusammenwirken mit der Antriebswelle 14 geführt wird. Hierdurch wird gleichzeitig ein lagerichtiges Aufsetzen des Deckels 7 auf den Behälter 5 erleichtert. Der Dorn 19 ist endseitig als Kugel 30 ausgebildet, um auch bei einer Schrägstellung des Deckels 7 beim Aufsetzen ein korrektes Zusammenwirken mit der Antriebswelle 14, die eine entsprechende Ausnehmung aufweisen kann, zu gewährleisten. Ferner kann eine nicht dargestellte Rastfeder in die hinter der Kugel 30 geformte Ringnut eingreifen, um den Dorn 19 rastend und ggf. drehbar mit der Antriebswelle 14 zu verbinden. In der in Fig. 3 gezeigten Position hat die Kugel 30 von einer Wirkfläche der Antriebswelle 14 bereits abgehoben, während bei dem erfindungsgemässen Ausführungsbeispiel in der in Fig. 2 gezeigten Position die Kugel noch an der Wirkfläche der Antriebswelle 14 anliegt.

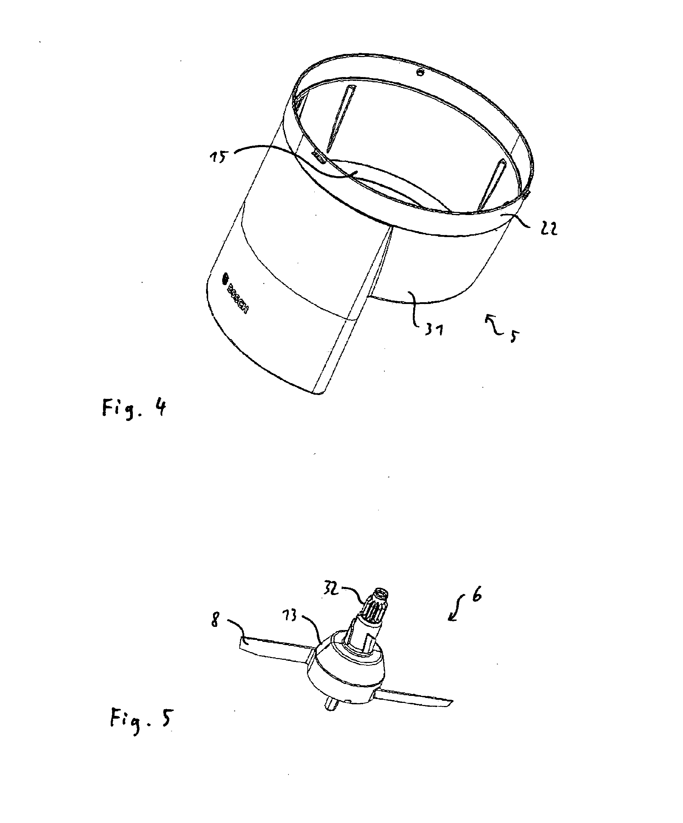

Wie Fig. 4 gezeigt, weist ein Behälter 5 eines erfindungsgemäßen Küchengeräts eine Wand 31, einen Boden 15 und einen Rand 23 auf. Der Behälter 5 ist zum Aufnehmen von Lebensmitteln ausgebildet und kann weitere Konstruktionselemente aufweisen, die insbesondere zum Erleichtern des Aufsetzens und zum Halten des Behälters 5 auf das Grundgerät des Küchengeräts dienen können.

Gemäß Fig. 5 weist ein Werkzeug 6 eines erfindungsgemäßen Küchengeräts eine Hülle 13 auf, die Instrumente zum Bearbeitung von Lebensmitteln, beispielsweise Mischflügel 8 tragen können. Das Werkzeug 6 kann außerdem beispielsweise als umfangsseitige Zähne 32 ausgebildete Anschlussmittel zum Anschließen und Antreiben weiterer Instrumente aufweisen.

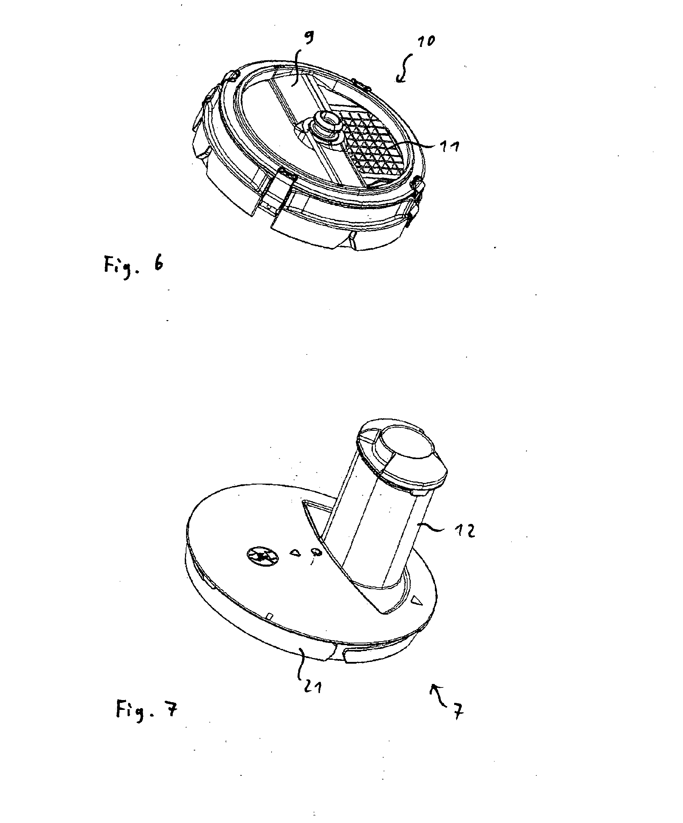

Derartige weitere Instrumente können beispielsweise gemäß Fig. 6 Schneidmesser 9 sein, die mit einem Schneidgitter 11 zum Würfel von Lebensmitteln zusammenwirken können. Das Schneidgitter 11 und die Schneidmesser 9 sind in einem Einsatz 10 angeordnet bzw. geführt, der in den Behälter 5 einsetzbar ist.

Wie in Fig. 7 gezeigt, weist ein Deckel 7 zum Verschließen des Behälters 5 einen Rand 22 auf, der mit dem Rand 23 des Behälters 5 zum Führen des Deckels 7 und zum Verhindern eines Eingriffs in den Innenraum des Behälters 5 bei leichtem Anheben des Deckels 7 zusammenwirkt. Der Deckel kann auch beispielsweise einen Zuführschacht 12 tragen, dessen Länge und Öffnungsweite insbesondere derart gewählt sind, dass bei aufgesetztem Deckel 5 ein Eingriff in das Schneidmesser 9 des Einsatzes 10 nicht möglich ist.

### Bezugszeichenliste

- 1: Küchengerät
- 2: Antriebseinheit
- 3: Motor
- 4: Anschlusseinheit
- 5: Behälter
- 6: Werkzeug
- 7: Deckel
- 8: Mischflügel
- 9: Schneidmesser
- 10: Einsatz
- 11: Schneidgitter
- 12: Zuführschacht
- 13: Hülle
- 14: Antriebswelle
- 15: Boden
- 16: Labyrinthdichtung
- 17: Kupplung
- 18: Zwischenwelle
- 19: Dorn
- 20: Kupplungsbuchse
- 21: Abtriebswelle
- 22: Rand
- 23: Rand
- 24: Zähne
- 25: Kupplungsstück
- 26: Kupplungsgegenstück
- 27: Kopplungselement
- 28: Schraubenfeder
- 29: Zentrierhülse
- 30: Kugel
- 31: Wand
- 32: Zähne

## Patentansprüche

1. Motorbetriebenes Küchengerät (1) mit einer Antriebseinheit (2), einem Behälter (5) zur Aufnahme von Lebensmitteln, der durch einen Deckel (7) verschlossen werden kann, und einem in dem Behälter (5) angeordneten Werkzeug (6) mit einem Instrument zum Bearbeiten von Lebensmitteln, wobei das Werkzeug (6) eine Antriebswelle (14) aufweist, und wobei die Antriebswelle (14) in einer Längsrichtung verlagerbar ist zwischen einer Antriebsstellung, in der die Antriebswelle (14) von der Antriebseinheit (2) antreibbar ist, und einer Trennstellung, in der die Antriebswelle (14) von der Antriebseinheit (2) getrennt ist, und das Küchengerät (1) ein Grundgerät aufweist, das die Antriebseinheit (2) umfasst, und auf das der Behälter (5) und das Werkzeug (6) aufsetzbar sind, **dadurch gekennzeichnet, dass** in der Antriebsstellung die Antriebswelle (14) mit einer Zwischenwelle (18) drehfest gekoppelt und in der Trennstellung von dieser getrennt ist und dass durch Aufsetzen des Behälters (5) die Zwischenwelle (18) mit einer Abtriebswelle (21) der Antriebseinheit (2) drehfest koppelbar und durch Abnehmen des Behälters (5) von dieser trennbar ist.

2. Motorbetriebenes Küchengerät (1) nach Anspruch 1, **dadurch gekennzeichnet, dass** durch Verschließen des Behälters (5) mit dem Deckel (7) die Antriebswelle (14) in Antriebsstellung und durch Öffnen des Deckels (7) in Trennstellung bringbar ist.

3. Motorbetriebenes Küchengerät (1) nach Anspruch 1 oder 2, **dadurch gekennzeichnet, dass** der Deckel (7) unterseitig einen Dorn (19) aufweist, der derart angeordnet ist, dass er beim Aufsetzen des Deckels (7) auf den Behälter (5) mit der Antriebswelle (14) zum Verlagern der Antriebswelle (14) in die Antriebsstellung zusammenwirkt.

4. Motorbetriebenes Küchengerät (1) nach Anspruch 3, **dadurch gekennzeichnet, dass** die Antriebswelle (14) oberseitig zugänglich ist und eine stirnseitige Wirkfläche zum Zusammenwirken mit dem Dorn (19) aufweist.

5. Motorbetriebenes Küchengerät (1) nach Anspruch 3 oder 4, **dadurch gekennzeichnet, dass** Mittel zum Zentrieren des Dorns (19) zum Zusammenwirken mit der Antriebswelle (14) beim Aufsetzen des Deckels (7) vorgesehen sind.

6. Motorbetriebenes Küchengerät (1) nach einem der Ansprüche 3 bis 5, **dadurch gekennzeichnet, dass** der Dorn (19) endseitig als Kugel (30) ausgebildet ist und die Antriebswelle (14) endseitig eine zentrale Ausnehmung aufweist.

7. Motorbetriebenes Küchengerät (1) nach einem der Ansprüche 3 bis 6, **dadurch gekennzeichnet, dass** Rastmittel für eine rastende Verbindung zwischen dem Dorn (19) und der Antriebswelle (14) vorgesehen sind.

8. Motorbetriebenes Küchengerät (1) nach einem der vorhergehenden Ansprüche, **dadurch gekennzeichnet, dass** die Antriebswelle (14) durch eine elastische Rückstellkraft in die Trennstellung vorgespannt ist.

9. Motorbetriebenes Küchengerät (1) nach dem vorhergehenden Anspruch, **dadurch gekennzeichnet, dass** die Rückstellkraft durch eine auf die Antriebswelle (14) wirkende Federkraft erzeugt wird.

10. Motorbetriebenes Küchengerät (1) nach dem vorhergehenden Anspruch, **dadurch gekennzeichnet, dass** das Werkzeug (6) eine Kupplung (17) zur Kopplung der Antriebswelle (14) mit der Zwischenwelle (18) umfasst, die ein der Antriebswelle (14) zugeordnetes, in der Längsrichtung der Antriebswelle (14) verlagerbares Kupp-, lungsstück (25) und ein der Zwischenwelle (18) zugeordnetes, in der Längsrichtung der Antriebswelle (14) feststehendes Kupplungsgegenstück (26) aufweist.

11. Motorbetriebenes Küchengerät (1) nach einem der vorhergehenden Ansprüche, **dadurch gekennzeichnet, dass** die Zwischenwelle (18) in ihrem der Abtriebswelle (21) zugewandten Endbereich einen als regelmäßiges Vieleck geformten Querschnitt aufweist und die Abtriebswelle (21) in ihrem dem Werkzeug (6) zugewandten Endbereich eine offene Kupplungsbuchse (20) mit einem zu dem des Endbereichs der Zwischenwelle (18) komplementären Querschnitt aufweist.

## Claims

1. Motor-powered kitchen device (1) having a drive unit (2), a container (5) for receiving food products, which can be closed by a cover (7), and a tool (6) arranged in the container (5) having an instrument for processing food products, wherein the tool (6) has a drive shaft (14), and wherein the drive shaft (14) can be displaced in a longitudinal direction between a driving position, in which the drive shaft (14) can be driven by the drive unit (2), and a release position, in which the drive shaft (14) is separated from the drive unit (2), and the kitchen device (1) has a basic device, which comprises the drive unit (2), and onto which the container (5) and the tool (6) can be fitted, **characterised in that** in the drive position the drive shaft (14) is coupled in a rotatably fixed manner to an intermediate shaft (18) and in the release position is separated therefrom and that by fitting the container (5) the intermediate shaft (18) can be coupled in a rotatably fixed manner to an output shaft (21) of the drive unit (2) and can be separated therefrom by removing the container (5).

2. Motor-powered kitchen device (1) according to claim 1, **characterised in that** by closing the container (5) with the cover (7) the drive shaft (14) can be brought into the drive position and by opening the cover (7) it can be brought into the release position.

3. Motor-powered kitchen device (1) according to claim 1 or 2, **characterised in that** the cover (7) has a mandrel (19) on the underside, which is arranged such that when the cover (7) is fitted onto the container (5) it interacts with the drive shaft (14) to displace the drive shaft (14) into the drive position.

4. Motor-powered kitchen device (1) according to claim 3, **characterised in that** the top of the drive shaft (14) is accessible and has an effective surface on the front face for interacting with the mandrel (19).

5. Motor-powered kitchen device (1) according to claim 3 or 4, **characterised in that** means are provided for centring the mandrel (19) for interacting with the drive shaft (14) when the cover (7) is fitted.

6. Motor-powered kitchen device (1) according to one of claims 3 to 5, **characterised in that** the mandrel (19) is designed as a sphere (30) on the end side and the drive shaft (14) has a central recess on the end side.

7. Motor-powered kitchen device (1) according to one of claims 3 to 6, **characterised in that** latching means are provided for a latching connection between the mandrel (19) and the drive shaft (14).

8. Motor-powered kitchen device (1) according to one of the preceding claims, **characterised in that** the drive shaft (14) is pre-tensioned into the release position by an elastic reset force.

9. Motor-powered kitchen device (1) according to one of the preceding claims, **characterised in that** the reset force is generated by a spring force acting on the drive shaft (14).

10. Motor-powered kitchen device (1) according to one of the preceding claims, **characterised in that** the tool (6) comprises a coupling (17) for coupling the drive shaft (14) to the intermediate shaft (18), which has a coupling piece (25) which can be displaced in the longitudinal direction of the drive shaft (14) and is associated with the drive shaft (14), and a coupling counterpiece (16) fixed in the longitudinal direction of the drive shaft (14) and associated with the intermediate shaft (18).

11. Motor-powered kitchen device (1) according to one of the preceding claims, **characterised in that** the intermediate shaft (18) has, in its end region facing the output shaft (21), a cross-section shaped like a regular polygon and the output shaft (21) has, in its end region facing the tool (6), an open coupling socket (20) with a cross-section which is complementary to that of the end region of the intermediate shaft (18).

## Revendications

1. Appareil ménager (1) motorisé, comprenant une unité d'entraînement (2), un récipient (5) destiné à recevoir des aliments, lequel peut être fermé au moyen d'un couvercle (7), et un outil (6) disposé dans le récipient (5), muni d'un instrument destiné à traiter les aliments, l'outil (6) présentant un arbre d'entraînement (14), et l'arbre d'entraînement (14) étant déplaçable dans le sens longitudinal entre une position d'entraînement, dans laquelle l'arbre d'entraînement (14) est entraînable par l'unité d'entraînement (2), et une position de séparation, dans laquelle l'arbre d'entraînement (14) est séparé de l'unité d'entraînement (2), et l'appareil ménager (1) présentant un appareil de base qui comprend l'unité d'entraînement (2), et sur lequel le récipient (5) et l'outil (6) peuvent être posés, **caractérisé en ce qu'**en position d'entraînement, l'arbre d'entraînement (14) est couplé à un arbre intermédiaire (18) de manière résistante à la torsion, et **en ce qu'**en position de séparation, il est séparé de celui-ci et **en ce que**, lorsque le récipient (5) est posé, l'arbre intermédiaire (18) peut être couplé à un arbre de sortie (21) de l'unité d'entraînement (2) de manière résistante à la torsion et **en ce qu'**il est séparé de celui-ci lorsque le récipient (5) est retiré.

2. Appareil ménager (1) motorisé selon la revendication 1, **caractérisé en ce qu'**en fermant le récipient (5) avec le couvercle (7), l'arbre d'entraînement (14) peut être mis en position d'entraînement et **en ce qu'**en ouvrant le couvercle (7), il peut être mis en position de séparation.

3. Appareil ménager (1) motorisé selon la revendication 1 ou 2, **caractérisé en ce que** le couvercle (7) présente sur le côté inférieur un tourillon (19) qui est disposé de manière à ce que, lorsque le couvercle (7) est posé sur le récipient (5), il coopère avec l'arbre d'entraînement (14) pour déplacer l'arbre d'entraînement (14) en position d'entraînement.

4. Appareil ménager (1) motorisé selon la revendication 3, **caractérisé en ce que** l'arbre d'entraînement (14) est accessible sur le côté supérieur et présente une surface active côté frontal pour coopérer avec le tourillon (19).

5. Appareil ménager (1) motorisé selon la revendication 3 ou 4, **caractérisé en ce que** des moyens de centrage du tourillon (19) sont ménagés pour coopérer avec l'arbre d'entraînement (14) lorsque le couvercle (7) est posé.

6. Appareil ménager (1) motorisé selon l'une quelconque des revendications 3 à 5, **caractérisé en ce que** le tourillon (19) est réalisé comme bille (30) côté terminal et **en ce que** l'arbre d'entraînement (14) présente un évidement central côté terminal.

7. Appareil ménager (1) motorisé selon l'une quelconque des revendications 3 à 6, **caractérisé en ce que** des moyens d'encliquetage sont ménagés pour une liaison par encliquetage entre le tourillon (19) et l'arbre d'entraînement (14).

8. Appareil ménager (1) motorisé selon l'une quelconque des revendications précédentes, **caractérisé en ce que** l'arbre d'entraînement (14) est précontraint dans la position de séparation par une force de rappel élastique.

9. Appareil ménager (1) motorisé selon l'une quelconque des revendications précédentes, **caractérisé en ce que** la force de rappel est générée par une force élastique agissant sur l'arbre d'entraînement (14).

10. Appareil ménager (1) motorisé selon l'une quelconque des revendications précédentes, **caractérisé en ce que** l'outil (6) comprend un accouplement (17) pour le couplage de l'arbre d'entraînement (14) avec l'arbre intermédiaire (18), lequel accouplement présente une pièce de couplage (25) attribuée à l'arbre d'entraînement (14), déplaçable dans le sens longitudinal de l'arbre d'entraînement (14), et une contre-pièce de couplage (26) attribuée à l'arbre intermédiaire (18), stationnaire dans le sens longitudinal de l'arbre d'entraînement (14).

11. Appareil ménager (1) motorisé selon l'une quelconque des revendications précédentes, **caractérisé en ce que** l'arbre intermédiaire (18) présente dans sa zone terminale tournée vers l'arbre de sortie (21) une section transversale formée comme polygone régulier et **en ce que** l'arbre de sortie (21) présente dans sa partie terminale tournée vers l'outil (6) une douille d'accouplement (20) ouverte ayant une section transversale complémentaire à celle de la zone terminale de l'arbre intermédiaire (18).
